# EUROPÄISCHE PATENTANMELDUNG

(11) **EP 0 726 431 A1**
(43) Veröffentlichungstag der Anmeldung: **14.08.1996**
(21) Anmeldenummer: 95101938.9
(22) Anmeldetag: 13.02.1995
(51) Int. Cl.: F24H 8/00, F28F 21/04

(54) **Wärmeübertragungsvorrichtung**

(71) Anmelder: Himsl, Manfred, D-94152 Neuhaus/Inn (DE)
(72) Erfinder: Himsl, Manfred, D-94152 Neuhaus/Inn (DE)
(74) Vertreter: Révy von Belvárd, Peter

(57) **Zusammenfassung**

Wärmeübertragungsvorrichtung, insbessonders Heizkessel, für die Wärmeübertragung von einem hocherhitzten Gas (107) mit einem Anteil an kondensierbaren Inhaltsstoffen, insbesonders Wasserdampf, auf ein flüssiges oder gasförmiges Heizmedium (111), bestehend aus einem geschlossenen Vorentwärmungsteil (101), in dem von einer Reaktionsvorrichtung (104) hocherhitztes Gas (107) erzeugt wird, das im Vorentwärmungsteil (101) teilweise entwärmt wird und in einem anschließenden Nachentwärmungsteil (105) in den es unter Zwischenschaltung eines Strömungsführungsteiles (118) übertritt, wenigstens einem Hochleistungswärmeaustauscher aus keramischem Sonderwerkstoff von oben nach unten durchströmt und unter die Kondensationstemperatur des kondensierbaren Inhaltstoffes abgekühlt wird, worauf das entwärmte Gas (108) und das Kondensat nach dem Übertritt in den Abscheideteil (106) voneinander getrennt und getrennt abgeleitet werden. Der Heizkessel zur Verbrennung von Heizöl oder Heizgas für die Erwärmung eines Heizmediums für eine Wärmeanlage weist einen ähnlichen Aufbau auf.

## Beschreibung

Die Erfindung betrifft eine Wärmeübertragungsvorrichtung mit einem Vorentwärmungsteil und einem Nachentwärmungsteil zur Wärmeübertragung von einem hocherhitzten Gas auf ein Heizmedium bei gleichzeitiger, Wenigstens teilweiser, Kondensation von wenigstens einem Reaktionsprodukt, wie Wasserdampf, und einem Abscheideteil zur Trennung des entwärmten Gases vom Kondensat, nach dem Oberbegriff des Anspruches 1.

Solche Wärmeübertragungsvorrichtungen sind vor allem in Form von Heizkesseln, die aus einem Teil, in dem die Verbrennung von gasförmigen, verdampften oder verdampfenden Brennstoffen stattfindet, und einem anschließenden Teil, in dem bei Wärmeentzug die Kondensation von Wasserdampf erfolgt, wobei die Wärme an ein Heizmedium übertragen wird, bekannt.
Auch bei Verbrennungskraftmachinen, wie insbesonders stationären Dieselmotoren wird die Entwärmung der Abgase uunter Kondensation des Wasserdampfanteils vorgenommen und die Wärme an ein Heizmedium übertragen.

In gleicher Weise werden auch Reaktionsgase aus anderen chemischen Umsetzungen, bei denen Reaktionsprodukte durch Kondensation abgeschieden werden dürfen oder sollen, oder der vergaste Anteil von festen Brennstoffen, die durch Vergasungsverfahren gewonnen wurden, behandelt.

Bei den bisher bekannt gewordenen Wärmeübertragungsvorrichtungen sind jedoch sehr große Korrosionsprobleme zu bewältigen, die bei Heizkesseln, besonders durch den intermittierenden Betrieb und der damit verbundenen Abkühlung von Vorrichtungsbauteilen unter die Kondensationstemperatur des Wasserdampfes verursacht sind; bei der Durchführung anderer chemischer Reaktionen tritt noch häufig noch der korrosive Angriff von Reaktionsteilnehmern hinzu.

Die vollständig korrosions- und temperaturbeständige Ausführung sowohl des Vorentwärmungsteiles als auch des Nachentwärmungsteiles einer solchen Wärmeübertragugnsvorrichtung ist nur mit erheblichen Aufwand unter Verwendung teurer, korrosionsbeständiger Werkstoffe möglich, deren Verarbeitung überdies meist schwierig ist und großer Sorgfalt bedarf.
Dazu kommt, daß für die Übertragung großer Wärmemengen im Kondensationsbereich, also bei verhältnismäßig niedrigen zur Verfügung stehenden Temperaturdifferenzen, entsprechend große Wärmeaustauschflächen erforderlich sind, die korrosionsbeständig ausgeführt werden müssen.

Aufgabe der Erfindung ist es, eine Wärmeübertragungsvorrichtung zu schaffen, die bei kompaktem Aufbau die Übertragung verhältnismäßig großer Wärmemengen über vergleichsweise kleine Wärmeaustauschflächen, auch im Kondensationsbereich durch gute Wärmeleitung der Übertragungswände möglich macht die gleichzeitig hohe Korrions- und Temperaturbeständigkeit und Temperaturwechselbeständigkeit besitzen.

Diese Aufgabe wird bei der eingangs genannten Wärmeübertragungsvorrichtung mit den Merkmalen des kennzeichnenden Teils des Anspruches 1 gelöst.

Die Erfindung wird mit den Merkmalen der Unteransprüche in sehr weitgehendem Umfang fortgebildet und das Schutzbegehren stellt gleichzeitig einen Teil der Beschreibung der Erfindung dar.

Durch die Aufteilung der Wärmeübertragungsvorrichtung in einen Vorentwärmungsteil, in dem das zugeführte, oder durch Reaktion entstandene hoch erhitzte Gas den Wärmeinhalt teilweise an die umschließende Wand abgibt und einen Nachentwärmungsteil, in dem das teilentwärmte Gas mit einer für diesen verträglichen Temperatur eintritt und dort unter die Kondensationstemperatur, wenigstens eines Reaktionsproduktes, abgekühlt wird, und einen Abscheideteil, in dem das Kondensat vom entwärmten Gas getrennt wird, ist eine optimale Anpassung der einzelnen Teile an die speziellen Anforderungen in den einzelnen Abschnitten der Wärmeübertragungsvorrichtung möglich.

Dadurch ist es möglich die Wärmeübertragungsvorrichtung für die Entwärmung von Reaktionsgasen aus chemischen Umsetzungen zu verwenden und auch chemische Reaktionen im Vorentwärmungsteil der Wärmeübertragungsvorrichtung ablaufen zulassen oder Abgase von Verbrennungskraftmachinen aller Art einzuleiten und zu entwärmen oder Brennstoffe mit Luft oder Sauerstoff im Vorentwärmungsteil zu verbrennen und zu entwärmen. Der von einer Wand mit hoher Temperatur umschlossene Raum des Vorentwärmungsteiles ermöglicht dabei eine ausreichende Verweilzeit des hocherhitzten Gases, das gleichzeitig auf eine für den Nachentwärmungsteil verträgliche Temperatur abgekühlt wird, sodaß dieser einer geringeren thermischen Belastung ausgesetzt ist.

Der Nachentwärmungsteil kann dadurch den hohen Anforderungen an die Korrosionsbeständigkeit, die Temperaturwechselbeständigkeit und die Wärmeleitung besser angepaßt werden.

Die lotrechte Strömung des Gases von oben nach unten in dem Bereich des Nachentwärmungsteiles in dem Kondensat gebildet wird, ermöglicht die gleichgerichtete Strömung von Gas und Kondensat, das damit sofort in den Abscheideteil überführt und dort vom entwärmten Gas abgetrennt wird.

Der Abscheideteil kann wegen der niedrigen Temperatur aus korrosionsfestem Kunststoff hergestellt werden, wodurch die Formgebung leicht an die gewünschte Trennaufgabe angepaßt werden kann, sodaß beispielsweise eine möglichst große Flüssigkeitsfläche für die Niederschlagung des Kondensats aus dem entwärmten Gas zur Verfügung gestellt werden kann.

Für die Durchführung einer Verbrennung oder einer Nachverbrennung kann jede beliebige, dafür geeignete Reaktionsvorrichtung Verwendung finden, bei der die Verbrennung im Vorentwärmungsteil der Wäremübertragungsvorrichtung abläuft.

Ein einfacher Aufbau der Wärmeübertragungsvorrichtung und eine einfache Gasführung wird erreicht, wenn Vorentwärmungsteil, Nachentwärmungsteil und Abscheidevorrichtung untereinander, besonders lotrecht untereinander, angeordnet sind, sodaß das Gas das Kondensat in Strömungsrichtung in den Abscheideteil überführt und dieses unter der Wirkung der Schwerkraft aus dem Nachentwärmungsteil abfließen kann.

Eine den gestellten Anforderungen besonders gut entsprechende Bauform des Nachentwärmungsteiles wird erreicht, wenn dieser für jedes verwendete Heizmedium aus einem Hochleistungswärmeaustauscher besteht, bei dem eine Mehrzahl von taschenförmigen Gaskanälen den Gasstrom aufteilen und von oben nach unten leiten, während eine Mehrzahl von, ebenfalls flachen, Querkanälen zwischen den Gaskanälen waagrecht verlaufend angeordnet sind und mit diesen in Wärmeaustausch stehen.
Die Strömungsführung des Heizmediums geschieht dabei durch dafür vorgesehene Strömungsverteiler an den Enden der Querkanäle von unten nach oben im Kreuz-Gegenstrom, sodaß eine hohe Leistungsfähgikeit des Wärmeaustauschers schon durch die Strömungsführung gewährleistet ist.

Temperaturbeständigkeit, Temperaturwechselbeständigkeit, Korrosionsbestädigkeit und sehr gute Wärmeleitfähigkeit des Hochleistungswärmeaustauschers wird durch den verwendeten Werkstoff sichergestellt, der aus einem Gemisch von Siliciumcarbid und Siliciumnitrid und Silicium oder aus Sintergraphit nach einem Spezial- verfahren hergestellt ist.
Eine besondere Verbesserung der Eigenschaften des Hochleistungswärmeaustauschers wird durch Anwendung von keramischen Fasern mit den beschriebenen Komponenten zur Herstellung eines Faserverbundwerkstoffes, erzielt.

Bei sehr platzsparendem Aufbau des Hochleistungswärmeaustauschers wird gleichzeitig eine hohe Wärmeübertragungsleistung und damit der Betrieb im Kondensationsbereich mit hohem Kondensatanteil, zum Beispiel von Wasserdampf, ermöglicht.

Die Herstellung einer gleichmäßigen Gasströmung im Hochleistungswärmeaustauscher des Nachentwärmungsteiles, die für eine hohe Wärmeübertragungsleistung wichtig ist, wird durch die Anbringung eines Strömungsführungsteiles im Abstand vor der Abströmöffnung aus dem Vorentwärmungsteil in den Nachentwärmungsteil erreicht.

Eine wirksame und sparsame Wärmedämmung für die Wärmeübertragungsvorrichtung wird durch den schichtweisen Aufbau der Wärmedämmung aus Dämmstoffplatten hergestellt, wobei besonders Faserverbundwerkstoffe mit überwiegend keramischem Anteil, angepaßt an die Temepraturbelastung der jeweiligen Schicht, Verwendung finden können.

Die Anordnung von Vorentwärmungsteil, Nachentwärmungsteil und Abscheideteil unmittelbar nacheinander ist besonders für einen Heizkessel im Kondensationsbetrieb und im intermittierendem Betrieb geeignet.

Bei einer als Heizkessel ausgebildeten Wärmeübertragungsvorrichtung für flüssige oder gasförmige Brennstoffe mit Kondensationsbetrieb stellt die Aufteilung in einen Brennraumkesselteil in dessen Brennraum die Verbrennung stattfindet und in einen Wärmeaustauscherkesselteil, in dem der überwiegende Anteil der freigesetzten Wärmemenge vom Rauchgas auf ein Heizmedium unter Kondensation des gebildeteten Wasserdampfes übertragen wird, und in einen Rauchgaskanal in dem das Kondensat vom Rauchgas getrennt wird, eine besonders einfache Anordnung dar, welche die Anpassung jedes Kesselteiles an die in diesem ablaufende Vorgänge hinsichtlich Aufbau und Werkstoffwahl besonders günstig erlaubt, wodurch sich eine sehr wirtschaftliche Lösung ergibt.

Dabei verbessert die Anbringung einer Umlenkplatte vor der Eintrittsöffnung des Wärmeaustauscherkesselteiles das gleichmäßige Einströmen des Rauchgases und damit die gleichmäßige Belastung der Wärmeaustauschfläche des Wärmeaustauschers und unterdrückt das Entstehen von schlecht angeströmten Kesselbereichen, an denen sonst bei Betriebsstillstand Kondensation auftreten kann, die durch die gute Erwärmung der Umlenkplatte infolge der Umspülung mit dem Rauchgas durch die abgegebene Strahlungswärme zusätzlich wirksam begegnet wird.

Die stehende Anordnung des zylindrischen Brennraumkesselteiles mit von oben eingesetzten, als Sturzbrenner angeordneten, nach unten brennenden Gebläsebrenner und mit nach unten anschließendem Wärmeaustauscherkesselteil ergibt eine einfache, kurze Führung des Rauchgases mit einer vergleichmäßigten Strömung in allen Kesselteilen.

Die Gestaltung des zylindrischen Brennraumkesselteiles, der die Brennerflamme eng umschließt, ergibt einen kompakten Aufbau des Heizkessels, und die wenigstens über einen Teil des zylindrischen Brennraumkesselteiles erfolgende Kühlung ist für die Lebensdauer des Brenners günstig, wenn sie im oberen Teil angeordnet ist und erlaubt die Erzielung einer erhöhten Vorlauftemperatur bei gleicher Durchströmleistung, im Bedarfsfalle.

Der Durchmessers des zylindrischen Brennraumkesselteiles ist günstigerweise so gewählt, daß die Rückführung eines Teiles der Rauchgase an den Brenner erfolgen kann, während die axiale Erstreckung die ungestörte Flammenentwicklung und damit den Ausbrand mit geringem Raumbedarf ermöglicht.

Die Verwendung einer Umlenkplatte in Abstand vor der Eintrittsöffnung des Wärmeaustauscherkesselteiles vergleichmäßigt das Einströmen des Rauchgases aus dem Brennraumkesselteil in den Wärmeaustauscher des Wärmeaustauscherkesselteiles und verhindert die Ausbildung schlecht angeströmter Zonen, besonders im Brennraum.

Der zylindrische Brennraumkesselteil besteht aus einem an die Temperatur im Brennraum angepaßten Werkstoff, wobei besonders Feuerleichtstein in jenem Bereich vorteilhaft ist, in dem keine Kühlung vorgesehen ist oder es wird ein entsprechend temperaturbeständiger keramischer Faserverbundwerkstoff verwendet.

Zur Kühlung des Brennraumes ist es möglich, besonders an der Außenwand des Brennraumkesselteiles Wärmeaustauschkanäle vorzusehen, welche als Wendel angeordnet und von unten nach oben durchströmt die Kühlung des Brennraumkesselteiles und damit die Herabsetzung der Temperatur des Rauchgases und andererseits eine Anhebung der Vorlauftemperatur ermöglicht.

Dabei kann durch Anordnung der Kanäle an der Außen- oder Innenwand oder in der Wand der Brennraumkesselteiles, die in diesen Fällen flüssigkeitsdicht aufgebaut ist und wobei durch die Temperatur und durch die Menge des durchströmenden Heizmediums, die Wandtemperatur und damit auch Temperatur des Rauchgases beeinflußt werden.

Die Anwendung eines Kühlringes im Bereich des Brennermundstückes verbessert die Standzeit und Funktion des Brenners, zusätzlich zur Anhebung der Vorlauftemperatur.

Die dichtende Anbringung des zylindrischen Brennraumkesselteiles auf einer Tragplatte verbessert die Wärmedämmung und ergibt einen sehr einfachen Aufbau.

Die Herstellung der Tragplatte aus wärmedämmendem, mechanisch tragfähigem Werkstoff, entsprechend hoher Temperaturbeständigkeit, verbessert die Lebensdauer des Heizkessels.

Die Verwendung einer Rohrschlange aus korrosionsfestem, metallischem Werkstoff, wie zum Beispiel Kupfer oder Edelstahl, die dicht an dicht gewickelt den zylindrischen Brennraumkesselteil bildet und die nach außen zu mit einem keramischen Dichtungsmittel, wie beispielsweise einem aushärtenden keramisch gefüllten KeramikfaserFeuchtvlies, abgedichtet ist ermöglicht eine stärkere Entwärmung des hocherhitzten Rauchgases und damit eine Herabsetzung der Eintrittstemperatur des Rauchgases in den Wärmeaustauscherkesselteil; überdies kann dadurch die Wärmeübertragungsleistung des Wärmeaustauscherkesselteiles verringert oder die Gesamtleistung gesteigert werden.

Die Rohrschlange und die Wärmeaustauschkanäle und der Kühlring sind jeweils unten über Verbindungsleitungen mit einem (dem) Wärmeaustauscher des Wärmeaustauscherkesselteiles und oben mit den Vorlaufleitungen verbunden, sodaß sich eine sehr einfache Leitungsführung für das Heizmedium ergibt.

Die Führung des Rauchgases im Wärmeaustauscher des Wärmeaustauscherkesselteiles von oben nach unten ermöglicht eine einfache Ableitung des Kondensats in der gleichen Strömungsrichtung, wobei der Wärmeübergang von den Rauchgaskanälen an die Kanäle des Heizmediums durch ihre Formgebung wesentlich verbessert wird.

Die Führung der Kanäle für das Heizmedium, beispielsweise Wasser oder Verbrennungssluft, waagrecht quer zu den Rauchgaskanälen und im Kreuz-Gegenstrom von unten nach oben so, daß das Heizmedium mehrmals hin- und hergeführt wird, ergibt einen besonders wirksamen Wärmeaustausch.

Der Aufbau des Wärmeaustauschers aus gut wärmeleitendem, temperaturbeständigem und temperaturwechselbeständigem Werkstoff, der überdies große Korrosionsbeständigkeit aufweist, ermöglicht den Bau eines sehr kompakt aufgebauten Hochleistungswärmeaustauscher mit hoher Leistungsdichte.
Dabei wird als Werkstoff ein Gemisch von Siliciumcarbid und Siliciumnitrid mit Silicium oder Sintergraphit, mit Beimengung von keramischen Fasern zu einem keramischen Verbundwerkstoff, verwendet, dem hochtemperaturbeständige Metalloxide oder Silicate mit geringem Ausdehnungskoeffizienten, wie beispielsweise Cordierit oder dergleichen, zugesetzt sein können.

Die Führung des Heizmediums im Hochleistungswärmeaustauscher des Wärmeaustauscherksselteiles im Kreuz- Gegenstrom wird durch Umlenkkappen an den beiden Enden der Kanäle das Heizmedium mehrmals durch den Wärmeaustauscher hin und her geführt und von unten nach oben geleitet, sodaß die Strömungsführung mit Hilfe der Umlenkkappen in der jeweils gewünschten Weise, angepaßt an die Rücklauftemperatur und die Strömungsmenge des Heizmediums erfolgen kann.

Die aus temperaturbständigem Werkstoff bestehende Umlenkplatte zwischen Brennraumkesselteil und Wärmeaustauscherkesselteil ruht vorteilhafterweise auf einem Stützring mit Durchlässen für das Rauchgas und ist von einer Zentrierplatte genau mittig gehalten, damit der Durchtritt der Rauchgase von allen Seiten möglichst gleichmäßig erfolgt.

Um Verschmutzungen oder Beschädigungen durch abtropfendes Heizöl im Wärmeaustauscher zu vermeiden, ist die Umlenkplatte an der Oberseite mit einer Eintiefung zum Auffangen des Heizöls versehen.

Die Abdichtung zwischen dem Brennraumkesselteil, dem Wäremaustauscherkesselteil und dem Rauchgaskanal, sowie zwischen den Wärmeaustauschern des Wärmeaustauscherkesselteiles untereinander, verhindert den Austritt von Rauchgas in die Wärmedämmung und den Eintritt von Falschluft und wird günstigerweise ebenfalls aus einem keramischen Feuchtfaservlies hergestellt.

Durch den Aufbau des Rauchgaskanals aus einem lotrechten Rohrteil und einem unmittelbar daran anschließenden waagrechten Rohr- oder Wannenteil ist die Ableitung des Kondensats aus dem Wärmeaustauscherkesselteiles und die Abtrennung vom Rauchgas im waagrechten Rohr- oder Wannenteil besonders wirksam möglich. Die Ableitung der Rauchgase erfolgt dabei über eine an den Rauchgaskanal angeschlossene Rauchgasleitung und die Ableitung des Kondensats über eine Kondensatableitung.

Rauchgaskanal, Rauchgasleitung und Kondensatableitung können aus gegen das saure Kondensat beständigem Kunststoff hergestellt werden, dessen Formgebung leicht an die Kesselabmessungen oder an eine verbesserte Kondensattrennung angepaßt werden kann.Darüber hinaus ist die Herstellung dieser Bauteile aus Kunststoff besonders preisgünstig.

Die Abdeckung des Brennraumes des Brennraumkesselteiles von oben mit einer temperaturbeständigen Dämmplatte als Abdeckplatte und deren Abdeckung mit einem Abdeckteil in Form einer Stahlplatte, die mit Zugstangen mit dem Heizkesselrahmen zusammengespannt ist, ergibt einen sehr stabilen Aufbau des Heizkessels aus leicht demontierbaren Einzelelementen.
Die Anordnung von Öffnungen in der Abdeckplatte und dem Abdeckteil ermöglicht die einfache Anbringung eines Brenners.

Der Aufbau der Kesselteile auf einer Stützplatte aus wärmedämmendem Werkstoff, die auf dem Heizkesselrahmen aufliegt, ermöglicht einen einfachen Kesselaufbau, sowohl der inneren Kesselteile als auch der außenliegenden Isolationsplatten.

Die Erfindung wird nachstehend anhand mehrerer Ausführungsbeispiele beschrieben.
Es zeigt.
- Fig. 1: die Seitenansicht eines Heizkessels im Schnitt, mit einem Kühlring am oberen Ende des zylindrischen Brennraumkesselteiles mit drei, übereinanderliegenden Wärmeaustauschern im Wärmeaustauscherkesselteil;
- Fig. 2: die Seitenansicht eines Heizkessels im Schnitt, mit Wärmeaustauschkanälen an der Außenwand des zylindrischen Brennraumkesselteiles und mit zwei übereinaderliegenden Wärmeaustauschern im Wärmeaustauscherkesselteil;
- Fig. 3: die Seitenansicht eines Heizkessels im Schnitt, mit einer Rohrschlange aus Metall als Wand des Brennraumkesselteiles und mit einem Wärmeaustauscher im Wärmeaustauscherkesselteil;
- Fig. 4: die Seitenansicht einer Wärmeübertragungseinrichtung im Schnitt, mit einem katalytischen Brenner als Reaktionsvorrichtung und mit Strömungskanälen an der Außenwand des Vorentwärmungsteiles und mit einem Hochleistungswärmeaustauscher im Nachentwärmungsteil, schematisch.

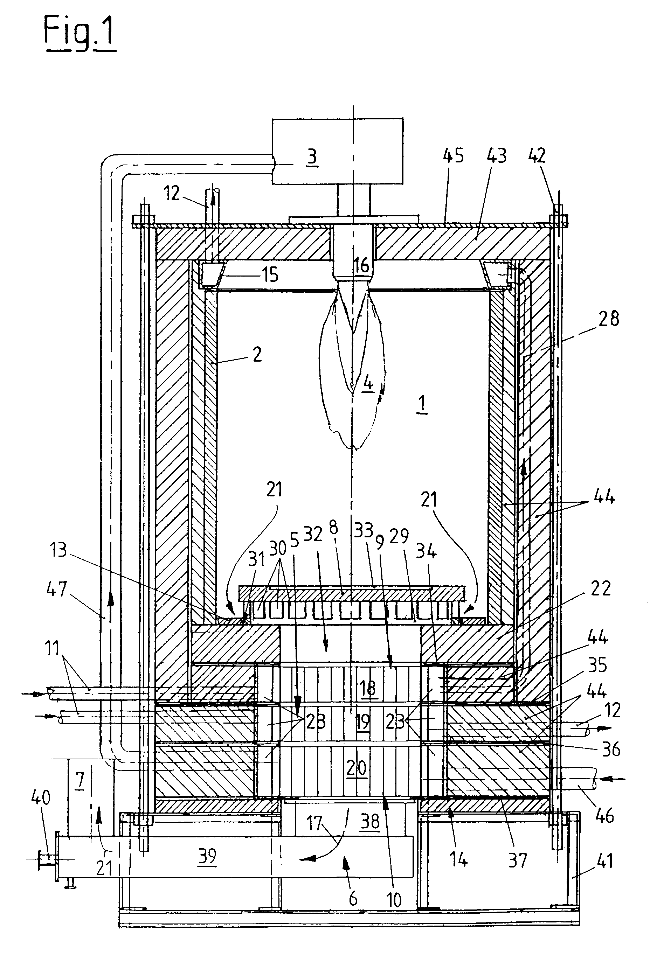

In Fig. 1 ist ein Heizkessel dargestellt mit einem Brennraum 1, der von einem zylindrischen Brennraumkesselteil 2 gebildet ist, der auf einer Tragplatte 22 dichtend aufgesetzt ist und auf dem oben ein Kühlring 15 dichtend angebracht ist, der von einer Abdeckplatte 43 dichtend überlagert ist. Die Abdeckplatte 43 ist mit einem Abdeckteil 45 abgedeckt, der aus einer Stahlplatte besteht, wobei in beiden Platten Öffnungen angebracht sind, durch die ein Gebläsebrenner 3 als Sturzbrenner nach unten brennend eingesetzt ist, sodaß sich seine Flamme 4 im Brennraum 1 entwickelt.

In der Tragplatte 2 ist axial eine Öffnung 32 angebracht, durch die das Rauchgas 21 in die Eintrittsöffnung 9 für den Wärmeaustauscherkesselteil 5 gelangt, in dessen lotrecht übereinander angeordneten, auf einer Stützplatte 14 aufgesetzten und gegen die Tragplatte 22 abgedichtet gehaltenen Wärmeaustauscher 18,19,20 Rauchgaskanäle angeordnet sind.

Vor der Öffnung 32 in der Tragplatte 22 ist auf einem Stützring 29 der in einer Vertiefung 31, die von einer ringförmigen Zentrierplatte 13 gebildet wird, steht und der mit Durchlässen 30 für das Rauchgas 21 versehen ist, eine Umlenkplatte 8 für das Rauchgas 21 aufgelegt, das unterhalb von dieser von außen nach innen strömend durch die Öffnung 32 in den Wärmeaustauscherkesselteil 5 gelangt.

Zum Auffangen abtropfenden flüssigen Brennstoffes ist an der Oberseite der Umlenkplatte 8 eine Eintiefung 33 zum Auffangen eingearbeitet, damit die Verschmutzung der darunter liegenden Wärmeaustauscher 18,19,20 verhindert wird.

Nach unten zu ist an die Austrittsöffnung 10 des Wärmeaustauscherkesselteiles, am untersten Wärmeaustauscher 20, ein Rauchgaskanal 6, der aus korrosionsbeständigem Kunststoff hergestellt ist, mit einem lotrechten Rohrteil 38 angesetzt, an den ein waagrecht angeordneter Rohr- oder Wannenteil 39 anschließt, der mit einer Rauchgasleitung 7, die ebenfalls aus korrosionsbeständigem Kunststoff hergestellt ist, verbunden ist, durch die das Rauchgas 21 abgeführt wird, während das abgetrennte Kondensat durch eine Kondensatableitung 40 einer nicht dargestellten Neutralisationsvorrichtung zugeführt wird.

Die Kondensatabscheidung aus dem Rauchgas 21 wird durch die gleichgerichtete Strömung mit dem Kondensat im Wärmeaustauscherkesselteil 5 von oben nach unten und durch das Überstreichen des bereits abgetrennten Kondensats durch das Rauchgas in waagrechter Strömungsrichtung 17 durch den Rauchgaskanal 6 verbessert.

Auf der Rauchgasseite ist die Tragplatte 22 gegen den ersten Wärmeaustauscher 18 mit einer Dichtung 34 und dieser gegen den zweiten Wärmeaustauscher 19 mit einer Dichtung 35 abgedichtet. Der zweite Wärmeaustauscher 19 ist mit der Dichtung 36 gegen den dritten Wärmeaustauscher 20 und dieser mit der Dichtung 37 gegen den Rauchgaskanal 6 und gegen die Stützplatte 14 abgedichtet.

Durch eine Zuluftleitung 46 wird dem dritten Wärmeaustauscher 20 Luft zugeführt, die durch diesen im Querstrom zum Rauchgas 21 hindurchgeführt und über eine Verbrennungsluftleitung 47 dem Gebläsebrenner 3 zugeleitet wird.

Im zweiten Wärmeaustauscher 19 wird über eine Rücklaufleitung 11 das Heizmedium für eine Wärmeanlage im Kreuz-Gegenstrom durch diesen geleitet und erwärmt über eine Vorlaufleitung 12 abgeführt.

Dem ersten Wärmeaustauscher 18 wird das Heizmedium über eine Rücklaufleitung 11 zugeführt, in diesem ebenfalls im Kreuz- Gegenstrom zum Rauchgas 21 geleitet und über eine Verbindungsleitung 28 dem Heizmedium führenden Kühlring 15 zur Kühlung des Mundstück des Gebläsebrenners 3 zugeführt und aus diesem über eine Vorlaufleitung 12 an eine nicht dargestellte Wärmeanlage abgeleitet.

In den Wärmeaustauschern 18,19.20 wird das Heizmedium, Wasser oder Luft, durch quer zur Strömungsrichtung 17 des Rauchgases 21 angeordnete Kanäle geleitet und durch Umlenkkappen 23 beiderseits an den Enden der Kanäle mehrmals umgelenkt, von unten nach oben im Kreuz- Gegenstrom im Wärmeaustauscher geführt.

Nach außen zu sind der Brennraumkesselteil 2 und der Wärmeaustauscherkesselteil 5 mit Isolationsplatten 44 wärmegedämmt und stehen über einer Stützplatte 14 auf einem Heizkesselrahmen 41 und sind über den Abdeckteil 45 der Abdeckplatte 43 mit Zugstangen 42 mit diesem fest zusammengeschraubt.

Der Kühlring 15 des Brennraumkesselteiles 2 besteht aus einem gegen die Temperatur des Brennraumes 1 beständigem metallischem Werkstoff, wie Chromnickelstahl oder dergleichen.
Der zylindrische Brennraumkesselteil 2 ist aus Feuerleichtstein hergestellt.
Die Umlenplatte 8 , der Stützring 29 und die Zentrierplatte 13 bestehen aus, gegen die Temperatur der Rauchgase 21 beständigem, keramischem Faserverbundwerkstoff oder dergleichen.
Die Tragplatte 22 besteht ebenfalls aus einem, gegen die Temperatur der Rauchgase 21 beständigem, tragfähigem Werkstoff, während die Stützplatte 14, neben der mechanischen Festigkeit, gute Wäremdämmungseigenschaften aufweist.
Die Isolationsplatten 44 bestehen aus Dämmplatten aus Faserverbundwerkstoffen mit je nach Temperaturbelastung abgestufter Temperaturbeständigkeit.
Die Dichtungen 34 bis 37 des Wärmeaustauscherkesslteiles bestehen aus einem keramischen Feuchtfaservlies, das bei Erwärmung aushärtet.

Die hinsichtlich Temperaturhöhe der Rauchgase, Temperaturbeständigkeit, sowie Korrosionsbeständigkeit beanspruchten Wärmeaustauscher 18,19,20 bestehen aus einem keramischem Sonderwerkstoff der aus einem Gemenge von Siliciumcarbid, Siliciumnitrid und Silicium mit einem Zusatz keramischer Fasern, dem gegebenenfalls geringe Mengen weiterer keramischer Stoffe mit geringem Wärmeausdehnungskoeffizienten und hoher Temperaturbeständigkeit, wie Cordierit oder entsprechenden Metalloxiden, beigemengt sind.

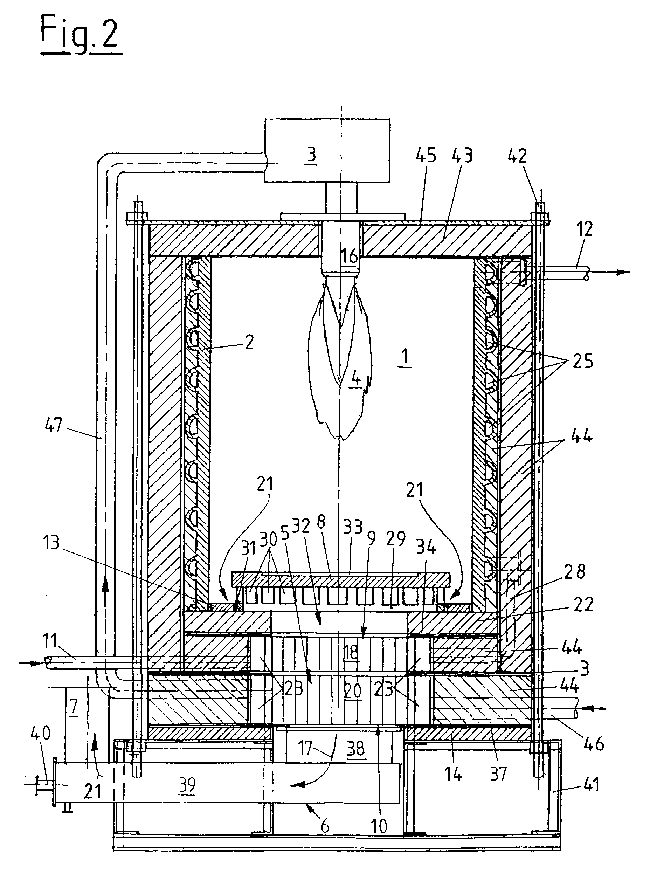

Der in Fig. 2 wiedergegebene Heizkessel unterscheidet sich von dem vorher beschriebenen durch einen zylindrischen Brennraumkesselteil 2, dessen Außenwände 26 mit einem wendelförmig, von unten nach oben, beabstandet verlaufenden Wärmeaustauschkanal 25 für das Heizmedium, insbesonder Wasser, versehen ist und der am unteren Ende mit einer Verbindungsleitung 28 zum Wärmeaustauscherkesselteil 5 und am oberen Ende mit einer Vorlaufleitung 12 zu einer nicht dargestellten Wärmeanlage verbunden ist.

Der zylindrische Brennraumkesselteil 5 besteht aus einem flüssigkeitsdicht hergestellten keramischen Material, das gegen die hohe Temperatur an der Innenwand 27, die große Temperaturdifferenz zwischen dieser und der Außenwand 28 und gegen den auftretenden Temperaturwechsel im intermittierendem Betrieb beständig ist.

Des weiteren besteht der Wärmeaustauscherkesselteil 5 aus einem ersten Wärmeaustauscher 18 für die Erwärmung von Heizmedium, insbesonders Wasser, wobei eine Umlenkkappe 23 mit einer Rücklaufleitung und die andere Umlenkkappe 23 mit der Verbindungsleitung 28 zum Wärmeaustauschkanal 25 des zylindrischen Brennraumkesselteiles 2 verbunden ist.

Der zweite Wärmeaustauscher 20 dient der Vorwärmung der Verbrennugnsluft und seine Umlenkkappen 23 sind mit der Zuluftleitung 46 und der Verbrennungsluftleitung 47 verbunden.

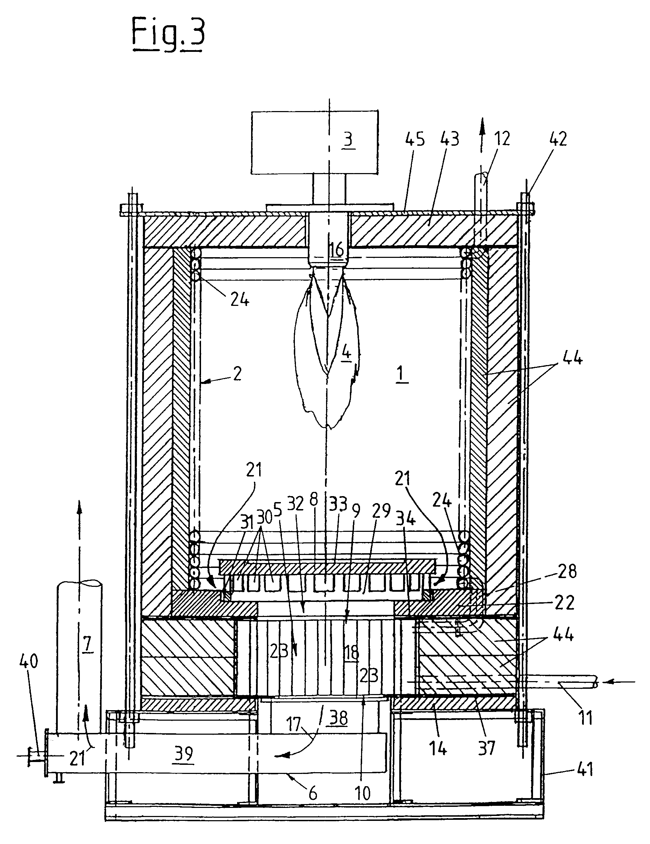

In Fig. 3 ist eine weitere Ausführungsform eines Heizkessels dargestellt, bei der im Unterschied zu den anderen, in Fig. 1 und 2 gezeigten Ausführungsformen der zylindrische Brennraumkesselteil 2 von einer dicht an dicht gewickelten Rohrschlange 24 aus Chromnickelstahl, oder Kupfer oder dergleichen hergestellt ist, die nach außen zu zusätzlich mit einem keramischen Feuchtfaservlies abgedichtet ist und die mit ihrem unteren Ende mit der Verbindungsleitung 28 zu dem Wärmeaustauscherkesselteil 5 und mit dem oberen Ende mit der Vorlaufleitung 12 zu einer nicht dargestellten Wärmeanlage verbunden ist.

Der Wärmeaustauscherkesselteil 5 besteht aus einem Wärmeaustauscher 18 für die Erwärmung von Heizmedium, insbesonders Wasser, das mit Hilfe von Umlenkkappen 23, ebenfalls wie früher beschrieben, im Kreuz-Gegenstrom geführt ist. Die eine Umlenkkappe 23 ist mit der Rücklaufleitung 11 einer Wärmeanlage und die andere Umlenkkappe 23 mit der Verbindungsleitung 28 verbunden.

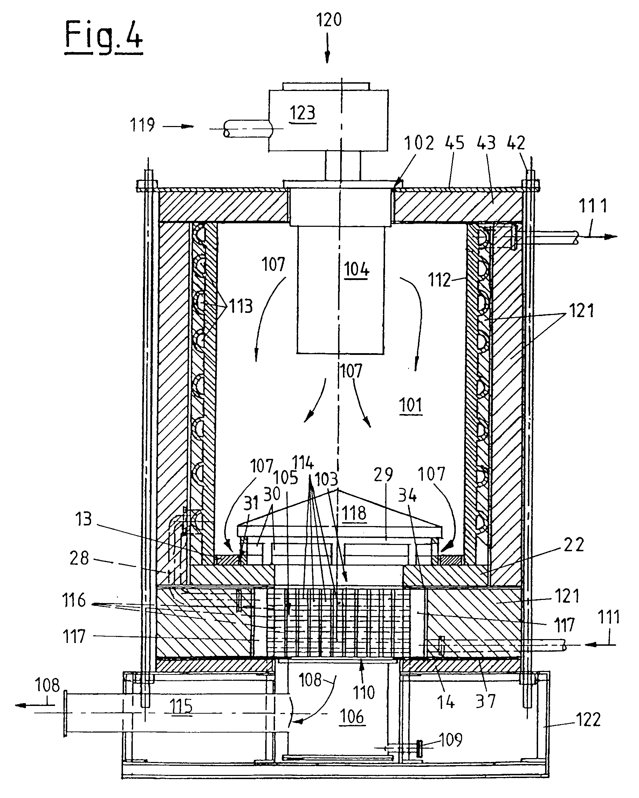

In Fig. 4 ist eine Wärmeübertragungsvorrichtung wiedergegeben, die einen zylindrischen Vorentwärmungsteil 101 aufweist, dessen Wand 112 aus flüssigkeitsdicht hergestelltem Werkstoff mit geringem Ausdehnungskoeffizienten besteht, an dessen Außenwand im Abstand voneinander ein Strömungskanal 113 für das Heizmedium 11 wendelförmig angebracht bzw. eingearbeitet ist, der oben mit einer Ableitung und unten mit einer Verbindungsleitung 28, die an einen Hochleistungswärmeaustauscher eines Nachentwärmungsteiles 105 geführt ist, verbunden ist.

Die Wand 112 des Vorentwärmungsteiles 101 ruht auf einer Tragplatte 22, aus einem keramischen Werkstoff, vorzugsweise einem Faserverbundwerkstoff, die gegen die Temperatur des hocherhitzten Gases 107 beständig ist.

Der Vorentwärmungsteil 101 ist mit einer wärmeisolierenden Abdeckplatte 43, aus dem gleichen oder einem vergleichbaren Werkstoff, abgedeckt, der von einem Abdeckteil 45, vorzugsweise einem Metallrahmen, überlagert ist.

In der Abdeckplatte 43 und dem Abdeckteil 45 ist eine Zuführöffnung 102 angebracht, durch die eine Zuleitung für ein hocherhitztes Gas 107 oder eine Reaktionsvorrichtung 104 eingesetzt ist.

Das hocherhitzte Gas 107 aus der Zuleitung oder aus der Reaktionsvorrichtung 104 strömt im Vorentwärmungsteil 101 nach unten und wird von einem Strömungsführungsteil 118 umgelenkt und strömt unterhalb von diesem von außen nach innen und durch die Abströmöffnung des Vorentwärmungsteiles 101 in der Tragplatte 22.

Der Strömungsführungsteil 118 steht mit einem Stützring 29, der mit Durchlässen 30 für das hocherhitzte Gas 107 versehen ist auf der Tragplatte 22 und ist von einer ringförmigen Zentrierplatte 13 in seiner Lage gehalten.

Durch die zentrale Abströmöffnung 103 gelangt das hoch erhitzte Gas 107 in den Hochleistungswärmeaustauscher des Nachentwärmungsteiles 105, der mit einer Mehrzahl lotrecht angeordneter Gaskanäle 114 mit flachem, taschenförmigem Querschnitt für die Führung des hocherhitzten Gases 107 von oben nach unten ausgestattet ist.

Die abgegebene Wärme wird an das Heizmedium 11 übertragen, das in Querkanälen 116 des Hochleistungswärmeaustauschers, die ebenfalls einen flachen Querschnitt aufweisen, mehrmals im Querstrom hin und her und von unten nach oben geführt wird.
Diese Kreuz-Gegenstromführung des Heizmediums 11 in den Querkanälen 116 wird mit Strömungsverteilendstücken 117, die an den gegenüberliegenden Enden der Querkanäle 116 ansetzen, vorgenommen.
An den Strömungsverteilerendstücken 117 sind eine Zufuhrleitung für das Heizmedium und die Verbindungsleitung 28 zum Strömungskanal 113 angeschlossen.

Der Hochleistungswärmeaustauscher besteht aus einem gut wärmeleitenden, korrostionsfestem temperatur- und temperaturwechselbeständigem keramischen Werkstoff, der vor allem aus Siliciumcarbid, Siliciumnitrid und Silicium gesintert ist, der mit keramischen Fasern verstärkt einen Faserverbundwerkstoff bildet und gegebenenfalls geringe Beimengungen von Oxiden und/oder Silicaten mit kleinen Wärmeausdehnungskoeffizienten enthält.

Das entwärmte Gas 108 strömt durch die Austrittsöffnung 110 des Nachentwärmungsteiles 105 zusammen mit dem gebildeten Kondensat, in den als stehendes Rohr ausgebildetem Abscheideteil 106 aus korrosionsbeständigem Kunststoff, der mit einer Abfuhrleitung 115 für das entwärmte Gas 108 und mit einer Kondensatableitung 109 für das abgetrennte Kondensat versehen ist.

Das zur Reaktion zu bringende Gas 119 oder die Luft oder das andere Reaktionsgas 120 wird einem Misch- und Gebläseteil 123 zugeleitet, der der Reaktionsvorrichtung 104 vorgeschaltet ist.

Der Hochleistungswärmeaustauscher des Nachentwärmungsteiles 105 sitzt auf einer Stützplatte 114 und ist gegen diese und gegen den Abscheideteil 106 mit einer Dichtung 37 und der Hochleistungswärmeaustauscher gegen die Tragplatte 22 nach oben mit einer Dichtung 34 abgedichtet, die aus einem keramaischen Faserverbundwerkstoff, wie einem keramischen Feuchtfaservlies entsprechender Temperaturbeständigkeit, besteht.

Vorentwärmugnsteil 101 und Nachentwärmungsteil 105 sind nach außen mit Isolationsplatten 121 aus Faserverbundwerkstoff mehrlagig wärmegedämmt.

Die Wärmeübertragungsvorrichtung ist auf einen Aufbaurahmen 122 aufgebaut und mit Zugstangen 42 mit dem Abdeckteil 45 gegen den Aufbaurahmen 122 zusammengespannt gehalten.

### Verzeichnis der Bezugszeichen

- 1: Brennraum
- 2: zylindrischer Brennraumkesselteil
- 3: Gebläsebrenner
- 4: Flamme
- 5: Wärmeaustauscherkesselteil
- 6: Rauchgaskanal
- 7: Rauchgasleitung
- 8: Umlenkplatte
- 9: Eintrittsöffnung des Wärmeaustauscherkesselteiles 5 für das Rauchgas 21
- 10: Austrittsöffnung des Wärmeaustauscherkesselteiles 5 für das Rauchgas 21
- 11: Rücklaufleitung
- 12: Vorlaufleitung
- 13: Zentrierplatte
- 14: Stützplatte
- 15: Kühlring
- 16: Brennermundstück
- 17: Strömungsrichtung des Rauchgases 21
- 18: erster Wärmeaustauscher des Wärmeaustauscherkesselteiles 5
- 19: zweiter Wärmeaustauscher des Wärmeaustauscherkesselteiles 5
- 20: dritter Wärmeaustauscher des Wärmeaustauscherkesselteiles 5
- 21: Rauchgas
- 22: Tragplatte
- 23: Umlenkkappe des Wärmeaustauschers 18,19,20
- 24: Rohrschlange
- 25: Wärmeaustauschkanal des zylindrischen Brennraumkesselteiles 2
- 26: Außenwand des zylindrischen Kesselteiles 2
- 27: Innenwand des zylindrischen Kesselteiles 2
- 28: Verbindungsleitung des Kühlringes 15 oder des Wärmeaustauschkanals 25 oder der Rohrschlange 24 mit dem Wärmeaustauscherteil 5
- 29: Stützring der Umlenkplatte 8
- 30: Durchlässe des Strützringes 29
- 31: Vertiefung von der Zentrierplatte 13 gebildet, oder in der Tragplatte 22
- 32: Öffnung in der Tragplatte 22
- 33: Eintiefung in der Umlenkplatte 8
- 34: Dichtung zwischen der Tragplatte 22 und dem ersten Wärmeaustauscher 18
- 35: Dichtung zwischen dem ersten Wärmeaustauscher 18 und dem zweiten Wärmeaustauscher 19
- 36: Dichtung zwischen dem zweiten Wärmeaustauscher 19 und dem dritten Wärmeaustauscher 20
- 37: Dichtung zwischen dem dritten Wärmeaustauscher 20 und dem Rohrteil 38
- 38: Rohrteil des Rauchgaskanals 6
- 39: waagerechter Rohr-oder Wannenteil des Rauchgaskanals 6
- 40: Kondensatableitung
- 41: Heizkesselrahmen
- 42: Zugstangen
- 43: Abdeckplatte des Feuerraumes 1
- 44: Isolationsplatten des Heizkessels
- 45: Abdecktteil für die Abdeckplatte 43
- 46: Zuluftleitung
- 47: Verbrennungsluftleitung
- 101: Vorentwärmungsteil
- 102: Zufuhröffnung des Vorentwärmungsteiles 101
- 103: Abströmöffnung des Vorentwärmungsteiles 101
- 104: Reaktionsvorrichtung
- 105: Nachentwärmungsteil
- 106: Abscheideteil
- 107: hocherhitzes Gas
- 108: entwärmtes Gas
- 109: Kondensatableitung
- 110: Austrittsöffnung(en) aus dem Nachentwärmungsteil 105
- 111: Heizmedium
- 112: Wand des Vorentwärmungsteiles 101
- 113: Strömungskanal für das Heizmedium 111
- 114: Gaskanal des Nachentwärmungteiles 105
- 115: Abfuhrleitung für das entwärmte Gas 108
- 116: Querkanäle des Wärmeaustauschers des Nachentwärmnungsteiles 105
- 117: Strömungsverteilendstück des Wärmeaustauschers des Nachentwärmungsteiles 105
- 118: Strömungsführungsteil des Vorentwärmungsteiles 101
- 119: Reaktionsgas
- 120: Verbrennungsluft oder zweites Reaktionsgas
- 121: Dämmstoffmaterial
- 122: Montagerahmen
- 123: Misch und Gebläseteil der Reaktionsvorrichtung 104

## Patentansprüche

1. Wärmeübertragungsvorrichtung für die Wärmeübertragung von einem hocherhitzten Gas (107), mit einem Anteil an kondensierbarem Inhaltsstoff(en), insbesonders mit wenigstens einem kondensierbaren Reaktionsprodukt, wie Wasserdampf, das insbesonders aus der Verbrennung von gasförmigen oder verdampften flüssigen oder vergasten festen Brennstoffen gebildet ist, an ein gasförmiges oder flüssiges Heizmedium (111) einer Wärmeanlage, mit einem Vorentwärmungsteil (101), einem daran anschließenden Nachentwärmungsteil (105), wobei in dem Vorentwärmungsteil (101) das hocherhitzte Gas (107) auf die für den Nachentwärmungsteil (105) verträgliche Temperatur durch Wärmeübertragung auf das Heizmedium (111) gesenkt wird und wenigstens in einem Teil des Nachentwärmungsteiles (105) Kondensation erfolgt und das Kondensat vom entwärmten Gas (108) abgetrennt und abgeleitet wird, dadurch gekennzeichnet, daß der Vorentwärmungsteil (101) der Wärmeübertragungsvorrichtung von einer, im wesentlichen geschlossenen, insbesonders auch Wärmestrahlung aufnehmenden Wand (112) gebildet ist, mit einer Zufuhröffnung (102) für das hocherhitzte Gas (107) oder einem gasförmigen oder flüssigen Brennstoff und der zugehörigen Verbrennungsluft und mit einer Abströmöffnung (103) für das teilentwärmte Gas, die aus einem, gegen die Temperatur und den korrosiven Angriff des hocherhitzten Gases (107) beständigen, insbesonders keramischen Werkstoff besteht und die wenigstens über einen Teil der axialen Erstreckung gekühlt ist, insbesonders indem das Heizmedium (111) in einer Kühlungsvorrichtung (112) in oder an der Wand (112) geführt ist, vorzugsweise in Strömungskanälen (113), wobei das teilentwärmte Gas in den Nachentwärmungsteil (105) strömt und in dem zumindest in jenem Bereich, in dem dieses von oben nach unten, vorzugsweise lotrecht, geleitet ist, das Kondensat gebildet wird und aus korrosionsbeständigem keramischen Werkstoff besteht und aus dem das Kondensat zusammen mit dem entwärmten Gas (108) durch (eine) Austrittsöffnung(en) (110) aus dem Nachentwärmungsteil (105) in den Abscheideteil (106) übertritt und vom entwärmten Gas (108) getrennt und durch die Kondensatableitung (109) abgeleitet wird.

2. Wärmeübertragungsvorrichtung nach Anspruch 1, dadurch gekennzeichnet, daß die Zufuhröffnung (102) des Vorentwärmungsteiles (101) eine Reaktionsvorrichtung (104), insbesonders eine katalytische Verbrennungsvorrichtung mit vorgeschaltetem Gebläse oder einen Brenner, vorzugsweise einen Gebläsebrenner, aufnimmt.

3. Wärmeübertragungsvorrichtung nach Anspruch 1 oder 2, dadurch gekennzeichnet, daß der Vorentwärmungsteil (101) oberhalb, insbesonders lotrecht oberhalb, des Nachentwärmungsteiles (105), vorzugsweise umittelbar anschließend, angeordnet ist.

4. Wärmeübertragungsvorrichtung nach Anspruch 1, dadurch gekennzeichnet, daß der Abscheideteil (106) unterhalb, insbesonders lotrecht unterhalb, des Nachentwärmungsteiles (105), vorzugsweise unmittelbar anschließend, angeordnet ist und mit einer Kondensatableitung (109) und einer Abfuhrleitung (115) für das entwärmte Gas (108) versehen ist.

5. Wärmeübertragungsvorrichtung nach einem der Ansprüche 1 bis 4, dadurch gekennzeichnet, daß der Nachentwärmungsteil (105) im wesentlichen von wenigstens einem Hochleistungswärmeaustauscher gebildet ist, der aus, gegen die Temperatur und dem korrosiven Angriff des hocherhitzten Gases (107) beständigem, gut wärmeleitenden Werkstoff, insbesonders aus einem keramischen Werkstoff, im wesentlichen aus Graphit, vorzugsweise Sintergraphit oder Siliziumcarbid, Siliziumnitrid oder dgl. oder aus einer Mischung von mehreren oder allen dieser Komponenten, vorzugsweise mit keramischen Fasern als Faserverbundwerkstoff aufgebaut, besteht, in dem eine Mehrzahl von Gaskanälen (114) für das zu entwärmende Gas von oben nach unten, im wesentlichen lotrecht verlaufend, angebracht sind.

6. Wärmeübertragungsvorrichtung nach einem der Ansprüche 1 bis 5, dadurch gekennzeichnet, daß in dem Hochleistungswärmeaustauscher des Nachentwärmungsteiles (105), quer zu den Gaskanälen (114), im wesentlichen waagrecht verlaufend, Querkanäle (116) für das Heizmedium (111) eingearbeitet sind, durch die das Heizmedium (111) quer zu den Gaskanälen (114) und von unten nach oben, mit beiderseits am Hochleistungswärmeaustauscher angeflanschten Strömungsverteilendstücken (117) im Kreuz-Gegenstrom geschaltet, geführt ist.

7. Wärmeübertragungsvorrichtung nach einem der Ansprüche 1 bis 3, dadurch gekennzeichnet, daß vor der Abströmöffung (103) des Vorentwärmungsteiles (101) ein Strömungsführungsteil (118) für das teilentwärmte Gas angeordnet ist, aus dem das Gas in einer, im wesentlichen vergleichmäßigten Strömung, aus dem Vorentwärmungsteil (101) in den Nachentwärmungsteil (105) geleitet wird.

8. Wärmeübertragungsvorrichtung nach einem der Ansprüche 1 bis 7, dadurch gekennzeichnet, daß die Anordnung von Vorentwärmungsteil (101) mit Reaktionsvorrichtung (104, Nachentwärmungsteil (105) und Abscheideteil (106) mit wenigstens einer und vorzugsweise mit mehreren Schichten von abgestuftem, temperaturbeständigem Dämmstoffmaterial, insbesonders Dämmstoffplatten, insbesonders aus wenigstens überwiegend keramischem Faserverbundwerkstoff bestehend, isoliert ist.

9. Wärmeübertragungsvorrichtung nach einem der Ansprüche 1 bis 8, dadurch gekennzeichnet, daß die Anordnung von Vorentwärmungsteil (101) mit Reaktionsvorrichtung (104), Nachentwärmungsteil (105) und Abscheideteil (106) unmittelbar nacheinander, im wesentlichen einen Heizkessel mit Kondensationsbetrieb bildet, der vorzugsweise in intermittierendem Betrieb arbeitet.

10. Wärmeübertragungsvorrichtung, nach Anspruch 9, insbesonders Heizkessel für Zentralheizungsanlagen, eingerichtet für die Verbrennung von Öl oder Gas, insbesonders Heizöl oder Heizgas, mit einem Gebläsebrenner (3), der von einem Brennraum (1) umgeben ist, an den sich ein Wärmeaustauscherkesselteil (5) unmittelbar anschließt, in dem ein wesentlicher Teil der Entwärmung des Rauchgases (21) stattfindet, dadurch gekennzeichnet, daß der Brennraum (1) von einem zylindrischen Brennraumkesselteil (2) umschlossen ist, an den wenigstens ein Wärmeaustauscher (18, 19,20) des Wärmeaustauscherkesselteiles (5), aus gegen die Rauchgastemperatur beständigen, gut wärmeleitenden und gegen sauren Angriff widerstandsfähigem Werkstoff hergestellt, im wesentlichen unmittelbar anschließt, in dem der bei der Verbrennung gebildete Wasserdampf des Rauchgases (21) wenigstens teilweise kondensiert und zusammen mit dem Rauchgas (21) in einen Rauchgaskanal (6) überströmt, von dem das gebildete Kondensat aufgefangen und abgeleitet wird, wobei zwischen dem zylindrischen Brennraumkesselteil (2) und de(r/n) Eintrittsöffnung(en) (9) des Wärmeaustauscherkesselteiles (5), im Abstand eine Umlenkplatte (8), einen Zug für das Rauchgas bildend, vorgeordnet ist.

11. Heizkessel nach Anspruch 10, dadurch gekennzeichnet, daß der zylindrische Brennraumkesselteil (2) stehend und der in den Brennraum (1) eingesetzte Gebläsebrenner (3), als Sturzbrenner nach unten gerichtet, angeordnet ist und an den zylindrischen Brennraumkesselteil (2) wenigstens ein Wärmeaustauscher (18,19 oder 20) des Wärmeaustauscherkesselteiles (5) nach unten zu unmittelbar ansetzt, an den nach unten zu ein Rauchgaskanal (6) anschließt.

12. Heizkessel nach Anspruch 10 oder 11, dadurch gekennzeichnet, daß der zylindrische Brennraumkesselteil (2) einen Durchmesser aufweist, der der Flamme (4) des Gebläsebrenners (3) Raum für deren Entwicklung und für die teilweise Rückführung von Rauchgas (21) gebend, diese eng umschließt.

13. Heizkessel nach einem der Ansprüche 10 bis 12, dadurch gekennzeichnet, daß der zylindrische Brennraumkesselteil (2) aus einem gegen die Temperatur der Flamme (4) des Gebläsebrenners (3) und des Rauchgases (21) temperaturbeständigen Werkstoff besteht, insbesonders mit geringer Wärmeleitfähigkeit bei Aufbau ohne Kühlvorrichtung, vorzugsweise aus Feuerleichtstein oder gleichwertigem Faserverbundwerkstoff bestehend.

14. Heizkessel nach einem der Ansprüche 10 bis 13, dadurch gekennzeichnet, daß der zylindrische Brennraumkesselteil (2) mit wenigstens einem Wärmeaustauschkanal (25) für das Heizmedium (108), insbesonders Wasser, versehen ist, der vorzugsweise an der Außenwand (26) und/oder an der Innenwand (27) des zylindrischen Brennraumkesselteiles (2) insbesonders in einer Wendel von unten nach oben laufend und/oder aus der Wand, vorzugsweise wenigstens teilweise, hervortretend angebracht ist.

15. Heizkessel nach einem der Ansprüche 10 bis 14, dadurch gekennzeichnet, daß am oberen Ende des zylindrischen Brennraumkesselteiles (2) ein Kühlring (15), insbesonders für die Kühlung des Gebläsebrennermundstückes (16), dichtend aufgesetzt ist, der mit einer Verbindungsleitung (28), an den wenigstens einen Wärmeaustauschkanal (25) des zylindrischen Brennraumkesselteiles (2) oder an einen Wärmeaustauscher (18 oder 19), vorzugsweise an den ersten Wärmeaustauscher (18) des Wärmeaustauscherkesselteiles (5) angeschlossen und mit der Vorlaufleitung (12) des Heizkessels verbunden ist.

16. Heizkessel nach einem der Ansprüche 10 bis 15, dadurch gekennzeichnet, daß der zylindrische Brennraumkesselteil (2) auf einer Tragplatte (22) dichtend aufgesetzt ist, die gleichzeitig gegen die Temperatur des Rauchgases beständig und gut wärmedämmend ist und vorzugsweise aus einem wenigstens überwiegend keramischen Faserverbundwerkstoff besteht.

17. Heizkessel nach einem der Ansprüche 10 bis 16, dadurch gekennzeichnet, daß der zylindrische Brennraumkesselteil (2) aus einer Rohrschlange (24) aus gegen sauren Angriff korrosionsbeständigem, metallischem Werkstoff besteht, an deren oberen Ende die Vorlaufleitung (12) und an deren unterem Ende vorzugsweise der erste Wärmeaustauscher (18) des Wärmeaustauscherkesselteiles (5) über die Verbindungsleitung (28) angeschlossen ist und die nach außen zu gegen den Durchtritt von Rauchgas (21), insbesonders mit keramischem Dichtungsmittel abgedichtet ist.

18. Heizkessel nach einem der Ansprüche 10,11,15 oder 17, dadurch gekennzeichnet, daß der wenigstens eine Wärmeaustauscher (18,19 oder 20) des Wärmeaustauscherkesselteiles (5) mit zu dessen Rauchgaskanälen im Kreuz-Gegenstrom geführten Kanälen für das Heizmedium, vorzugsweise Wasser, und für die Verbrennungsluft, versehen ist, wobei das Rauchgas (21) oben durch die Eintrittsöffnung (9) in den obersten, ersten Wärmeaustauscher (18) eintritt und nach unten durch Rauchgaskanäle strömt und unten durch die Austrittöffnung (10) austritt.

19. Heizkessel nach einem der Ansprüche 10,11,15 oder 17 bis 18, dadurch gekennzeichnet, daß der wenigstens eine Wärmeaustauscher (18,19, oder 20) taschenförmig ausgebildete Kanäle aufweist.

20. Heizkessel nach einem der Ansprüche 10,11,15 oder 17 bis 19, dadurch gekennzeichnet, daß der wenigstens eine Wärmeaustauscher (18,19,20) des Wärmeaustauscherkesselteiles (5) aus einem keramischen Werkstoff, vorzugsweise aus Graphit, vorzugsweise Sintergraphit oder Silizium, Siliziumcarbid, Siliziumnitrid oder dergl. oder Mischungen zweier, mehrerer oder aller dieser Stoffe besteht und insbesonders mit Beimengungen von Silikaten oder Metalloxiden mit hohem Schmelzpunkt und geringem Ausdehnungskoeffizienten, wie z.B. Cordierit oder dergl. versehen ist.

21. Heizkessel nach einem der Ansprüche 10,11,15 oder 17 bis 20, dadurch gekennzeichnet, daß der wenigstens eine Wärmeaustauscher (18,19,20) seitlich, vorzugsweise einander gegenüberliegende, Umlenkkappen (23) trägt, zur Führung des Heizmediums, insbesonders Wasser, im Gegenstrom zum Rauchgas (21) und die Rücklaufleitung (11) des Heizkessels und die Verbindungsleitung (28) an den Umlenkkappen (23) des oder der Wärmeaustauscher (18 oder 19) angeschlossen sind.

22. Heizkessel nach einem der Ansprüche 10,11,15 oder 17 bis 21, dadurch gekennzeichnet, daß wenigstens ein Wärmeaustauscher (20) des Wärmeaustauscherkesselteiles (5) für gasförmiges Heizmedium, insbesonders für die Vorwärmung der Verbrennungsluft, eingerichtet ist.

23. Heizkessel nach Anspruch 10, dadurch gekennzeichnet, daß die Umlenkplatte (8) aus temperaturbeständigem, insbesonders aus einem keramischen Werkstoff, vorzugsweise mit keramischen Fasern als Faserverbundwerkstoff aufgebaut, besteht, die im Brennraum (1) unten mittig angeordnet ist und auf einem Stützring (29) mit Durchlässen (30) für das Rauchgas (21) aufgelegt ist, wobei der Stützring insbesonders in einer, von einer Zentrierplatte (13) gebildeten Vertiefung (31) der Tragplatte (22) eingesetzt ist, in der eine Öffnung (32) für den Durchtritt des Rauchgases (21) zur Eintrittsöffnung (9) des obersten, ersten Wärmeaustauschers (18) des Wärmeaustauscherteiles (5) angebracht ist.

24. Heizkessel nach Anspruch 10 oder 23, dadurch gekennzeichnet, daß die Umlenkplatte (8) an der Oberseite mit einer Eintiefung (33) zum Auffangen von Tropföl des Gebläsebrenners versehen ist.

25. Heizkessel nach einem der Ansprüche 10 bis 22, dadurch gekennzeichnet, daß der oberste, erste Wärmeaustauscher (18) des Wärmeaustauscherkesselteiles (5) gegen die Tragplatte (22) und der unterste Wärmeaustauscher (18,19,20) gegen den Rauchgaskanal (6) und gegebenenfalls die Wärmeaustauscher (18,19,20) untereinander mit Dichtungen (34,35,36,37), insbesonders aus keramischen, gegen die Temperatur und den Säuregehalt des Rauchgases (21) beständigen Werkstoff hergestellt, vorzugsweise aus einem keramischen Faserverbundwerkstoff, abgedichtet sind.

26. Heizkessel nach einem der Ansprüche 10,11 und 25, dadurch gekennzeichnet, daß der Rauchgaskanal (6) aus einem an der Austrittsöffnung (10) des untersten Wärmeaustauschers (18 oder 19 oder 20) des Wärmeaustauscherkesselteiles (5) angeschlossenen Rohrteil (38) und einem anschließenden, im wesentlichen waagerechten, Rohr- oder Wannenteil (39) oder dergl. besteht, mit einem Anschluß für eine Rauchgasleitung (7) und für eine Kondensatableitung (49) und insgesamt vorzugsweise aus säurefestem Kunststoff hergestellt ist.

27. Heizkessel nach einem der Ansprüche 10,11 oder 23, dadurch gekennzeichnet, daß der Brennraum (1) nach oben von einer dichtend aufgelegten Abdeckplatte (43), insbesonders aus thermisch beständigem Wärmedämmwerkstoff, vorzugsweise einem keramischen Faserverbundwerkstoff, bestehend, abgeschlossen ist, die von einem Abdeckteil (45), insbesonders aus Metall, überlagert ist und in beiden eine Öffnung für den Gebläsebrenner (3) angebracht ist.

28. Heizkessel nach einem der Ansprüche 10,11 oder 23, dadurch gekennzeichnet, daß der Heizkessel auf einem Heizkesselrahmen (41), insbesonders auf einer Stützplatte (14), vorzugsweise aus wärmedämmenden Werkstoff, aufgebaut ist, auf dem die Isolationsplatten (44) von am Heizkesselrahmen (41) verschraubten Zugstangen (42) zusammengehalten sind.
